# EUROPEAN PATENT APPLICATION

(11) **EP 2 746 358 A1**
(43) Date of publication of application: **25.06.2014**
(21) Application number: 12198990.9
(22) Date of filing: 21.12.2012
(51) Int. Cl.: C09K 8/508, C08G 18/38

(54) **Polyurea silicate resin for wellbore application**

(71) Applicant: BASF SE, 67056 Ludwigshafen (DE)
(72) Inventor: Mc Donnell, Shane Oliver, Dr., 69008 Lyon (FR); Lafuente Cerda, Oscar, Dr., 85560 Ebersberg (DE); Walther, Burkhard, Dr., 84518 Garching (Alz) (DE); Kierat, Radoslaw, Dr., 83352 Altenmarkt an der Alz (DE)
(74) Representative: HOFFMANN EITLE

(57) **Abstract**

Described herein is a novel method of strengthening a wellbore wherein the method uses a polyurea silicate composition. In the method of strengthening an oil well, a gas well or a water well, a mixture comprising at least one isocyanate component having at least two isocyanate groups per molecule; at least one alkali metal silicate; and water is pumped through the oil well, the gas well or the water well into the annulus of the well; subsequently, the mixture is allowed to form a polyurea silicate composition; before the polyurea silicate composition sets to thereby give a polyurea matrix comprising domains of silicate.

## Description

The present invention relates to the use of a polyurea silicate composition in a method of strengthening a wellbore, in particular for the exploration and/or recovery of oil, gas or water.

In particular, the present invention relates to the use of a polyurea silicate composition in a method of strengthening a wellbore, wherein the polyurea silicate composition is obtainable by reacting a mixture comprising: at least one isocyanate component; at least one alkali metal silicate; and water. The present invention further relates to a method of strengthening a wellbore, wherein the method comprises the steps of:
(a) pumping a mixture comprising at least one isocyanate component; at least one alkali metal silicate; and water through an oil well, a gas well or a water well into the annulus of the well;
(b) allowing the mixture to form a polyurea silicate composition; and
(c) allowing the polyurea silicate composition thus formed to set to thereby give a polyurea matrix comprising domains of silicate.

Over the past decades, the oil and gas industry has made great progress in developing drilling technologies to make well construction more cost effective and safe. Inter alia, wellbore strengthening materials have been developed to avoid or at least minimize problems encountered while drilling. These problems include lost circulation, stuck pipe and hole collapse.

Wellbore strengthening materials such as cements have the common goal to improve the integrity of the wellbore and to prevent lost circulation. However, cement compositions and other materials comprising fibers and solid particulates are still not satisfactory. In particular, long-term stability of wellbores conferred by common materials is not yet sufficient, and loss of well control resulting in loss of production still occurs with prior art tools. Moreover, none of the prior art wellbore strengthening materials is suitable for all of the different geologic formations including clay, sandstone, siltstone and sand, and a particular problem arises when changes occur in the geologic formation during oil, gas or water production. In particular, pressure fluctuations within the formation surrounding the wellbore may overburden the mechanical properties including bending tensile strength of common wellbore strengthening materials. The stability of prior art materials is further challenged by an insufficient resistance to chemicals and water. In situations where the strengthening material isolates the wellbore from the surrounding geologic formations, this can be particularly troublesome, because initial defects can usually not be detected early enough to prevent progression without much effort. Often, this is because the wellbore contains a casing, usually made of metal, which prevents the operator from controlling the wellbore integrity by means of visual inspection. A further challenge results from the time required to apply the wellbore strengthening material. In particular, materials that set too early are not suitable for strengthening wellbores in the exploration and/or recovery of oil, gas or water. This is because providing the material to, e.g. the annulus of the wellbore often takes too much time, and the material would start to harden before it arrives at the target location.

It is thus an object of the present invention to provide improved wellbore strengthening means to address the above needs.

In a first aspect, the present invention therefore relates to the use of a polyurea silicate composition in a method of strengthening a wellbore, wherein the polyurea silicate composition is obtainable by reacting a mixture comprising (i) at least one isocyanate component; (ii) at least one alkali metal silicate; and (iii) water. The term wellbore in the context of the present invention refers to an oil well, a gas well or a water well.

It has been found that the polyurea silicate compositions described herein have suitable mechanical properties that render the polyurea silicate composition ideal for wellbore strengthening applications. Without wishing to be bound by theory, it is believed that the polyurea matrix - which is formed from the polyurea silicate composition while setting and which contains spherical domains of silicate - is particularly compatible with various chemicals and water, and it also shows good adhesion to different materials including steel and geological formations. It is further believed that the domains of silicate which are spherical in nature contribute to the enhanced stability. Without wishing to be bound by any theory, it is believed that these domains are formed during the reaction of the isocyanate component with water to liberate carbon dioxide. The latter then reacts with the alkali content of the water glass to thereby give polysilicate structures which can also be referred to as polysilicic acid and / or silicate.

In a second aspect, the present invention thus relates to a method of strengthening a wellbore, comprising the steps of:
(a) pumping a mixture comprising at least one isocyanate component; at least one alkali metal silicate; and water through an oil well, a gas well or a water well into the annulus of the well;
(b) allowing the mixture to form a polyurea silicate composition; and
(c) allowing the polyurea silicate composition thus formed to set to thereby give a polyurea matrix comprising domains of silicate.

The mixture comprising the at least one isocyanate component, the at least one alkali metal silicate, and water may comprise the isocyanate component in an amount of from 10 to 90, preferably of from 30 to 80, more preferably of from 50 to 70 per cent by weight based on the total weight of all of the at least one isocyanate component, the at least one alkali metal silicate and the water that is contained in the mixture. Preferably, the mixture comprises the at least one isocyanate component in an amount such that the ratio of the isocyanate component to the alkali metal silicate and water in parts by weight (pbw), i.e. pbw (isocyanate component) / pbw (alkali metal silicate and water) is of from 4:1 to 1:4, preferably of from 3.5: 1 to 1:1, more preferably of from 3.3:1 to 1.5:1.

The at least one isocyanate component may be any chemical entity comprising at least two isocyanate functional groups per molecule. The at least one isocyanate component may thus be a monomer, or it may be a dimeric, a trimeric, or an oligomeric derivative of a di-, tri- or poly-isocyanate. In a preferred embodiment, the at least one isocyanate component comprises an aliphatic or aromatic di-isocyanate, tri-isocyanate or poly-isocyanate or a dimeric, trimeric, or oligomeric derivative of any of these isocyanates or a homologue thereof.

In a preferred embodiment, the isocyanate component is selected from diphenyl methane diisocyanate (MDI), isophorone diisocyanate (IPDI), 1,6-diisocyanato hexane (HDI), 2,4-diisocyanato-1-methyl-benzene (TDI), 4,4'-diisocyanato dicyclohexylmethane (H12-MDI), trimethyl hexamethylene di-isocyanate (TMDI), or a derivative of any of these including dimeric, trimeric or oligomeric derivatives and homologues of any of these. The term homologue as used herein refers to derivatives of isocyanates that comprise additional repeating units such as isocyanatophenylmethyl in the case of MDI. Preferred derivatives include higher homologues of diphenyl methane diisocyanate that are also known as, e.g. 3-core, 4-core and 5-core systems (hereinafter also referred to as polymeric diphenyl methane diisocyanate or PMDI), polymeric isophorone diisocyanate (hereinafter also referred to as IPDI oligomer), polymeric 1,6-diisocyanato hexane (hereinafter also referred to as HDI-oligomer), polymeric 2,4-diisocyanato-1-methyl-benzene (hereinafter also referred to as TDI oligomer) and mixtures thereof. A particularly suitable isocyanate is diphenyl methane diisocyanate (MDI) and its higher homologues, i.e. PMDI. MDI and PMDI may be used either alone or in combination with other isocyanates and derivatives thereof, including e.g. isocyanurates. In one embodiment, MDI and PMDI isocyanates may preferably be used alone without the addition of further isocyanates and derivatives thereof such as isocyanurates.

In another embodiment, the isocyanate compound preferably comprises one or more of an isocyanurate, an allophanate (preferably HDI allophanate), an iminooxadiazindion (which is an isomeric isocyanurate, preferably isomeric HDI isocyanurate) and an uretdione (preferably HDI uretdione). Amongst these, isocyanurates are particularly preferable. It has been found that isocyanurates yield heat and chemical resistant products. In a preferred embodiment, isocyanurates may thus be used as the sole isocyanate component or as an admixture together with other isocyanates or isocyanate derivatives in oil and gas well applications where the well bore strengthening material is exposed to chemicals and high temperatures more often than in, e.g. water wells.

In one embodiment, the isocyanate component comprises a mixture of isocyanurates, preferably a mixture comprising isocyanurates derived from three di-isocyanate units (hereinafter also referred to as "monomeric isocyanurate"), dimeric isocyanurates derived from five monomeric isocyanate units, and trimeric isocyanurates derived from seven monomeric di-isocyanate units. Such mixtures may comprise smaller amounts of uretdions which are dimers of isocyanates. In a particularly preferred embodiment, the isocyanate component comprises of from 50 to 100 per cent by weight of the isocyanurate based on the total amount the isocyanate component.

In a preferred embodiment, the at least one isocyanate component comprises an isocyanurate that is formed from di-isocyanates. Preferably, the isocyanurate is formed from isophorone diisocyanate (IPDI), 1,6-diisocyanato hexane (HDI), 2,4-diisocyanato-1-methyl-benzene (TDI), 4,4'-diisocyanato dicyclohexylmethane (H12-MDI), trimethyl hexamethylene di-isocyanate (TMDI), or a dimeric, trimeric or oligomeric derivative of any of these. Most preferably, the isocyanate component comprises an isocyanurate of isophorone diisocyanate (IPDI) or 1,6-diisocyanato hexane (HDI) or a mixture of these isocyanurates.

In a further embodiment, suitable isocyanate compounds include derivatives of aliphatic and aromatic diisocyanates, oligomeric isocyanates and poly-isocyanates formed by reaction of at least one aliphatic or aromatic diisocyanate, tri-isocyanate or poly-isocyanate with at least one of a polyether polyol, a polyester polyol, a polycarbonate polyol and a polybutadiene polyol. These isocyanate components are hereinafter also referred to as isocyanate "pre-polymers". The pre-polymers can provide flexibility and ductility to the polyurea silicate composition and the polyurea matrix formed thereof depending on the length of the chain of the polyether polyol, the polyester polyol, polycarbonate polyol and the polybutadiene polyol. Suitable polyols have a molecular weight of from 50 to 8000 g/mol and have up to 20, preferably of from 2 to 6 hydroxy groups. Preferred polyols have a hydroxyl number of up to 120 or more, wherein the hydroxyl number indicates the number of mg KOH corresponding to the hydroxyl group in 1 g polyol sample as determined according to DIN 53240. Preferred polyether polyols include polypropylene glycols. Polybutadiene diols may be used to increase the hydrophobic character of the polyurea silicate composition, and polycarbonate diols are useful to yield good mechanical strength.

In a further embodiment, the at least one isocyanate component preferably comprises at least one blocked isocyanate functional group wherein a part of the isocyanate functional groups or all of them are temporarily protected. The protective groups preferably withstand temperatures of up to 100 to 180 °C depending on the individual chemical moieties formed from the isocyanate group and the protective group before they split off or rearrange to liberate the reactive groups, usually isocyanate. Suitable protective groups include caprolactam, dimethyl-pyrazol, diethyl-malonate, methyl ethyl ketoneoxim, 1,2,4-triazole, diisopropylamine, phenol and nonyl phenol.

Most preferably, the isocyanate component is selected from 1,6-diisocyanato hexane (HDI) and its derivatives, preferably from isocyanurates of HDI; and diphenyl methane diisocyanate (MDI) and its derivatives including polymeric diphenyl methane diisocyanate (PMDI).

When preparing the mixture of the at least one isocyanate component, the at least one alkali metal silicate and water, there is no particular limitation regarding the order of these components, and any of the three constituents may be added to one or both of the other two components. In a preferred embodiment, the alkali metal silicate is first mixed with water to give an aqueous solution of the alkali metal silicate (herein after also referred to as "water glass") before the water glass is then mixed with the at least one isocyanate component. Preferably, the amount of the alkali metal silicate within the mixture which further comprises the at least one isocyanate component and water is of from 20 to 60 per cent by weight, preferably of from 30 to 45 per cent by weight based on the total amount of alkali metal silicate and water.

The at least one alkali metal silicate is preferably selected from sodium silicate, potassium silicate and lithium silicate, most preferably from sodium silicate. In a preferred embodiment, the alkali metal silicate is mixed with water to give an aqueous solution of the alkali metal silicate (hereinafter also referred to as water glass). Subsequently, this solution is then combined with the at least one isocyanate component to give the mixture which reacts to form the polyurea silicate composition. Preferably the alkali metal silicate has a modulus m of from 1.5 to 4, preferably of from 2.3 to 3.5, wherein m = SiO₂ / M₂O, wherein M is Na, K or Li. Most preferably, the modulus of sodium and potassium silicate is of from 2.7 to 3.0 whereas the modulus of lithium silicate is, most preferably, of from 2.7 to 3.2.

Without wishing to be bound by any theory, it has been found that the matrix formed after setting of the polyurea silicate composition is particularly stable when the modulus is within the above ranges.

Formation of the polyurea silicate composition from the mixture comprising the at least one isocyanate component, the at least one alkali metal silicate and water can be performed optionally in the presence of one or more additives and/or auxiliary agents conventionally used in the preparation of polyisocyanate/polysilicic acid resins.

These additives include: mono- and polyols, polyether polyols, plasticisers, diluents, fire retardants, antifoaming agents, adhesion increasing agents, thixotropic agents, thickeners, pigments, colorants, mono- di- or polyester type compounds, water glass stabilizers, fillers and emulsifying agents.

In a preferred embodiment of the present invention, the polyurea silicate composition is obtained from a mixture which comprises at least one of a catalyst, an emulsifying agent and a filler in addition to the at least one isocyanate component, the at least one alkali metal silicate and water.

The catalyst can be any compound that catalyses the reaction of the isocyanate component and the alkali metal silicate. Suitable catalysts include organometallic catalysts and tertiary amine compounds. Suitable amine compounds include trialkyl amines such as triethylamine, tripropylamine, tributylamine and derivatives of trialkyl amines including, without limitation, 2-(dimethylamino)ethanol and other dialkyl alcanol-amines such as 2-[2-(Dimethylamino) ethoxy]ethanol, Bis(2-dimethylaminoethyl)ether and Bis(2-morpholinoethyl)ether. A particularly preferable tertiary amine compound is triethylenediamine (1,4-diazabicyclo[2.2.2]octane, DABCO). Preferred organometallic catalysts include tin based, zinc based, strontium based and bismuth based catalysts. A preferred tin based catalyst is dibutyltin dilaurate (DBTL). Preferred bismuth based and zinc based catalysts include carboxylic acid salts of bismuth and zinc, such as bismuth tris 2-ethylhexanoate.

In stead of or in addition to adding one or more of the above catalysts, an emulsifying agent may be used to also accelerate the reaction of the isocyanate component and the alkali metal silicate and to stabilize the emulsion formed therefrom. Preferred emulsifying agents include non-ionic emulsifying agents such as alkylpolyglucosides and fatty alcohol ethoxylates. Examples of alkylpolyglucosides include Triton CG 110 (available from Dow) and Lutensol GD 70 (available from BASF). Preferred fatty alcohol ethoxylates include Lutensol AT 11 and Lutensol AT 13 (both available from BASF).

The mixture may further comprise one or more fillers. Preferred fillers include inorganic materials such as sand, SiO2, barium sulphate, calcium carbonate, bauxite, quartz, aluminum hydroxides and aluminum oxides. The filler may be used in an amount of up to 80 per cent by weight based on the total weight of all constituents of the mixture.

In the second aspect, the present invention relates to a method of strengthening a wellbore. The method of strengthening the wellbore according to the invention comprises the step of:
(a) pumping a mixture comprising at least one isocyanate component having at least two isocyanate groups per molecule; at least one alkali metal silicate; and water through an oil well, a gas well or a water well into the annulus of the well;
(b) allowing the mixture to form a polyurea silicate composition; and
(c) allowing the polyurea silicate composition thus formed to set to thereby give a polyurea matrix comprising domains of silicate.

The term annulus in the context of the present invention refers to the void which is formed between the geologic formation and any piping, tubing or casing introduced into the wellbore during or after drilling the formation.

In a preferred embodiment of the invention, the annulus is a void between a casing and the geologic formation.

As desribed herein above, the polyurea matrix comprising domains of silicate can also be referred to as polyisocyanate/polysilicic acid-based resin. This resin preferably has a compression strength of from 10 to 50 MPa, preferably of from 20 to 50 MPa, more preferably of rom 30 to 50 MPa, even more preferably of from 40 to 50 MPa, and a bending tensile strength of from 10 to 40 MPa, preferably of from 10 to 30 MPa, more preferably of from 20 to 30 MPa. Compression strength and bending tensile strength can be determined as described herein below.

The mechanical properties of the polyurea matrix are particularly valuable for strengthening wellbores, i.e. oil wells, gas wells and water wells. Moreover, the polyurea matrix is found to be particularly stable when in contact with chemicals such as strong acids, strong bases or hydrocarbons. This chemical stability renders the polyurea matrix an ideal material for applications in oil and gas wells.

The mixture comprising the at least one isocyanate component, the at least one alkali metal silicate and water, preferably has a pot life of at least 1 hour, more preferably of at least 4 hours, most preferably of up to 5 to 10 hours. The pot life in the context of the present invention is the time at which the composition has lost its self-levelling properties. The pot life can be determined as described herein below.

In a further embodiment, the mixture has a hardening time at 20 °C of up to 100 hours, preferably of from 20 to 80 hours, more preferably of from 50 to 75 hours. The hardening time in the context of the present invention defines the point in time at which the surface of the sample withstands a pressure of 0.327 N/mm2 exhibited by a steel needle having a weight of 300 g and a diameter of 3 mm without deformation. Once the hardening time is reached, formation of the polyisocyanate/polysilicic acid based resin is sufficiently complete. The term "sufficiently complete" in this context is to be understood in a way that as much as about 90% of the final mechanical strength is formed. The hardening time can be determined as described herein below.

It has been found that the mixture comprising the at least one isocyanate component, the at least one alkali metal silicate and water can be applied easily for wellbore strengthening applications if the pot life and the hardening time of the mixture are within the above ranges.

In particular, it is observed that the mixture can be pumped through a wellbore into the annulus of the well without running the risk that the mixture sets too early if pot life and hardening time are within the above ranges.

As indicated hereinabove, the polyurea silicate composition as well as the polyurea matrix obtained therefrom shows good adhesion to steel and geologic formations. In a particularly preferred embodiment, the invention therefore further relates to a method, wherein the mixture comprising the at least one isocyanate component, the at least one alkali metal silicate and water is pumped through the wellbore into the annulus of the well wherein the annulus is a void between a steel casing and a geologic formation.

In the following, the invention will be described in further detail by way of the following examples.

### Example 1

A mixture comprising an isocyanurate formed from 1,6-diisocyanato hexane (HDI) (Desmodur N3600^{®}, available from Bayer) and water glass (Inocot Na 4830^{®}, comprising 43.5 parts by weight of sodium silicate and 56.25 parts by weight water; modulus of sodium silicate: m = 2.9; available from van Baerle) was prepared as follows.

200 g Desmodur N3600^{®} and 100 g Inocot Na 4830^{®} were mixed vigorously in a 1 litre polyethylene beaker with a stirring device IKA RW20 Digital at 2000 rpm for 1 to 2 minutes to obtain a homogeneous mixture.

The mixture was then transferred into a mold made of expanded polystyrene to completely fill the mold. The mold had a cavity having a rectangular base area of 4 cm x 16 cm and a height of 4 cm. The mixture was left at 20 °C for seven days. During this period, pot life and hardening time were determined as follows.

Pot life was determined at 20 °C by pressing the end of a wooden spatula having a width of 1.5 cm and a thickness of 2 mm into the mixture to a depth of 3 to 4 cm. This procedure was repeated every 30 minutes until the composition no longer showed self-levelling properties. Self-levelling in the context of this invention means that the composition did not self-level to the initial state of the surface of the sample within 15 seconds after removing the spatula from the mixture. The time at which the composition had lost this flow property is defined as pot life.

Hardening time was determined at 20 °C by placing a steel needle having a weight of 300 g and a diameter of 3 mm to thereby apply a pressure of 0.327 N/mm2 onto the surface of the sample. The steel needle was left on top of the surface for 10 seconds before it was removed again. This procedure is repeated every 1 to 3 hours at a different area of the sample surface until the sample withstands the pressure exhibited by the needle without deformation. The time at which the surface of the sample no longer deforms is defined as hardening time.

Bending tensile strength and compression strength values were determined at 20 °C using a Z250 SN allround line instrument manufactured by Zwick.

To determine the bending tensile strength of the sample, the expanded polystyrene mould was removed with a cardboard cutter after seven days to carefully cut out the sample. A three point bending test in accordance with EN 1015-11 was conducted at controlled force using the sample thus obtained. The preload was set at 15 N, and the measurement was run at a measuring velocity of 50 N/s. Results are given in N/mm2 (MPa).

The results of the bending tensile strength measurements are indicated in table 1.

Compression strength values were determined with the fragments resulting from the bending tensile strength measurement. These fragments were cut into cubic samples of 4 cm edge length. Compression strength tests were performed in accordance with EN 1015-11 at controlled force. The preload was set at 15 N, and the measurement was run at a measuring velocity of 400 N/s. Results are given in N/mm2 (MPa).

The results of the compression strength measurements are indicated in table 1.

### Example 2

Example 1 was repeated with the only difference that 230 g Desmodur N3600^{®} and 70 g Inocot Na 4830^{®} were used for the sample preparation instead of 200 g and 100 g, respectively.

Pot Life, hardening time, compression strength and bending tensile strength were determined as described in example 1. The results are indicated in table 1.

### Example 3

Example 1 was repeated with the only difference that 180 g Desmodur N3600^{®} and 120 g Inocot Na 4830^{®} were used for the sample preparation instead of 200 g and 100 g, respectively.

Pot Life, hardening time, compression strength and bending tensile strength were determined as described in example 1. The results are indicated in table 1.

### Example 4

Example 1 was repeated with the only difference that Desmodur N3600^{®} was replaced by 200 g of Desmodur N3400^{®} (available from Bayer) as the isocyanate component comprising an uretdione dimer of 1,6-diisocyanato hexane (HDI).

Pot Life, hardening time, compression strength and bending tensile strength of the sample thus obtained were determined as described in example 1. The results are indicated in table 1.

**Table 1**

| Example | pot life [h] | Hardening time [h] | Bending tensile strength [N/mm2] | Compression strength [N/mm2] |
|---|---|---|---|---|
| 1 | 5 | 72 | 17.5 ^{#} | 45.6 * |
| 2 | 5 | 72 | 20.8 | 42.6 ^{#} |
| 3 | 4.5 | 72 | 19.8 | 44.3 ^{#} |
| 4 | 5.5 | 72 | 29.6 ^{#} | 40.3 * |

| | | | | |
|---|---|---|---|---|
| ^{#} value is the average of two samples; * value is the average of three samples | | | | |

The results obtained from the above examples demonstrate that the polyurea silicate compositions described herein are particularly useful in methods for strengthening an oil well, a gas well or a water well.

## Claims

1. Use of a polyurea silicate composition in a method of strengthening an oil well, a gas well or a water well, wherein the polyurea silicate composition is obtainable by reacting a mixture comprising (i) at least one isocyanate component having at least two isocyanate groups per molecule; (ii) at least one alkali metal silicate; and (iii) water.

2. The use according to claim 1, wherein the at least one isocyanate component comprises an aliphatic or aromatic di-isocyanate, tri-isocyanate or poly-isocyanate or a homologue of any of these or a dimeric, trimeric or oligomeric derivative thereof, preferably diphenyl methane diisocyanate (MDI), isophorone diisocyanate (IPDI), 1,6-diisocyanato hexane (HDI), 2,4-diisocyanato-1-methyl-benzene (TDI), 4,4'-diisocyanato dicyclohexylmethane (H12-MDI), trimethyl hexamethylene di-isocyanate (TMDI), a homologue thereof, or a dimeric, trimeric or oligomeric derivative of any of these, or a mixture of two or more thereof.

3. The use according to any of claims 1 and 2, wherein the at least one isocyanate component comprises an isocyanurate.

4. The use according to any of the preceding claims, wherein the at least one isocyanate component is a derivative of an aliphatic or aromatic di-isocyanate, tri-isocyanate or poly-isocyanate or of a homologue of any of these which is formed by the reaction of the aliphatic or aromatic di-isocyanate, tri-isocyanate or poly-isocyanate or the homologue with at least one of a polyether polyol, a polyester polyol, a polycarbonate polyol and a polybutadiene polyol.

5. The use according to any of the preceding claims, wherein the at least one isocyanate component comprises one or more blocked isocyanate functional groups.

6. The use according to any of the preceding claims, wherein the at least one alkali metal silicate is selected from sodium silicate, potassium silicate and lithium silicate, preferably sodium silicate.

7. The use according to any of the preceding claims, wherein the alkali metal silicate has a modulus m of from 2 to 4, preferably of from 2.3 to 3.5, wherein m = SiO₂ / M₂O, and wherein M is Na, K or Li.

8. The use according to any of the preceding claims, wherein the mixture further comprises at least one of a catalyst, an emulsifying agent and a filler.

9. The use according claim 8, wherein the catalyst is selected from compounds comprising at least one amine functional group, preferably a tertiary amine functional group; and organometallic catalysts.

10. The use according to any of claims 10 and 11, wherein the emulsifying agent is a non-ionic emulsifying agent.

11. The use according to any of claims 10 to 12, wherein the filler is an inorganic material.

12. The use according to any of the preceding claims for the exploration and/or recovery of oil, gas or water.

13. Method of strengthening an oil well, a gas well or a water well, comprising the steps of:
(a) pumping a mixture comprising at least one isocyanate component having at least two isocyanate groups per molecule; at least one alkali metal silicate; and water through the oil well, the gas well or the water well into the annulus of the well;
(b) allowing the mixture to form a polyurea silicate composition; and
(c) allowing the polyurea silicate composition thus formed to set to thereby give a polyurea matrix comprising domains of silicate.

14. The method according to claim 13, wherein the annulus is a void between a casing and a geologic formation.
